# EUROPEAN PATENT APPLICATION

(11) **EP 0 529 696 A1**
(43) Date of publication of application: **03.03.1993**
(21) Application number: 92201536.7
(22) Date of filing: 27.05.1992
(51) Int. Cl.: C08K 3/22, C08K 3/24, C08L 73/00

(54) **Compositions of polymers of carbon monoxide and ethylenically unsaturated compounds**

(30) Priority: 31.07.1991 US 738405; 31.07.1991 US 738410
(71) Applicant: SHELL INTERNATIONALE RESEARCH MAATSCHAPPIJ B.V., NL-2596 HR Den Haag (NL)
(72) Inventor: Slaugh, Lynn Henry, Houston, Texas 77070 (US)

(57) **Abstract**

Compositions comprising a linear alternating polymer of carbon monoxide with at least one ethylenically unsaturated compound and a melt stabilizing agent, wherein the melt stabilizing agent is a mixture of magnesium oxide and oxide(s) of titanium and/or aluminium and is present in an amount of from 0.1 %w to 10 %w, relative to the weight of the linear alternating polymer.

## Description

This invention generally relates to polymer composition comprising a polyketone polymer and a melt stabilizing agent.

The relevant polyketone polymers are linear alternating polymers of carbon monoxide and at least one ethylenically unsaturated compound. Polymers of this type are disclosed in, for example, European patent applications 121,965, 181,014, 213,671, and 257,663 and in U.S. patents 4,880,865, and 4,822,871. Whilst these polymers have attractive physical and mechanical properties such as yield stress, tensile strength, impact strength and flexural modulus, in some instances their processing properties may leave room for improvement.

Polyketone polymers with a high molecular weight, which is frequently characterized by the intrinsic viscosity, or limiting viscosity number (LVN), have better physical properties as engineering thermoplastic than copolymers with a lower intrinsic viscosity. Melt processing, e.g. extrusion, of copolymers, especially when they have an LVN of above about 2.0 dl/g (measured at 60 °C in m-cresol), is adversely affected by a poor melt stability which is apparent from a notable increase of the viscosity of the melt with increasing residence time. In particular in fibre and sheet applications, melt-extrusion is a critical step, even for copolymers with a low LVN. It is evident that this problem of the instability of the copolymer melt needs to be solved.

Compositions comprising a linear alternating polymer of carbon monoxide with at least one ethylenically unsaturated compound and a melt stabilizing agent are known in the art. For example, it is known from EP-A-326224 that the stabilizing agent may be an aluminium hydroxide, such as bayerite. Whilst the addition of such a material to the polyketone polymers brings about an improvement of the stability of the melt, it appears that especially for melt processing operations in commercial production of moulded parts and extrusion at commercial scale of fibres and sheet, the melt stability could be improved even further. It is the object of the present invention to provide polymer compositions having further improved melt stability.

It has now surprisingly been found that addition of oxides of magnesium and titanium or oxides of magnesium and aluminium to a polyketone polymer composition results in an improvement in the melt stability of the composition. It is in particular surprising that a synergistic stabilizing effect is achieved in the polyketone polymers by adding thereto a mixture of magnesium oxide with an oxide of titanium or aluminium.

The present patent application therefore relates to compositions comprising a linear alternating polymer of carbon monoxide with at least one ethylenically unsaturated compound and a melt stabilizing agent, wherein the melt stabilizing agent is a mixture of magnesium oxide and oxide(s) of titanium and/or aluminium and is present in an amount of from 0.1 %w to 10 %w, relative to the weight of the linear alternating polymer.

In the composition of the invention the melt stabilizing agent is present in an amount of from 0.1 to 10 %w, relative to the amount of the linear alternating polymer. Preferably, the melt stabilizing agent is present in an amount of from 0.5 to 5 %w, in particular from 0.7 to 2 %w, relative to the amount of the linear alternating polymer. When the stabilizing agent comprises oxides of magnesium and titanium, the weight ratio of magnesium oxide to titanium oxide preferably amounts to from 20:80 to 80:20, especially from 40:60 to 60:40. When the stabilizing agent comprises oxides of magnesium and aluminium, the weight ratio of magnesium oxide to aluminium oxide preferably amounts to from 5:95 to 60:40, especially from 15:85 to 40:60.

The melt stabilizing agent of the present invention is suitably prepared by preparing an intimate mixture of magnesium and titanium and/or aluminium compounds, for example by kneading the compounds in the presence of a small amount of water to form a thick paste, followed by drying and calcining the intimate mixture, suitably at above 300 °C, preferably at 400 to 600 °C. Eligible magnesium, titanium and aluminium compounds are, for example, magnesium hydroxide, titanic acid and alumina, respectively.

The polyketone polymers which are employed in the compositions of the invention are of a linear alternating structure and contain substantially one molecule of carbon monoxide for each molecule of ethylenically unsaturated compound. The ethylenically unsaturated compound is suitably an ethylenically unsaturated hydrocarbon and has preferably up to 20 carbon atoms inclusive, more preferably up to 10 carbon atoms. Suitable ethylenically unsaturated hydrocarbons are aliphatic, such as ethylene and other α-olefins including propylene, 1-butene, isobutylene, 1-hexene, 1-octene and 1-dodecene, or are arylaliphatic, i.e. containing an aryl substituent on an otherwise aliphatic molecule, particularly an aryl substituent on a carbon atom of the ethylenic unsaturation. Illustrative of this latter class of ethylenically unsaturated hydrocarbons are styrene, p-methylstyrene, p-ethylstyrene and m-isopropylstyrene. The preferred polyketone polymers are copolymers of carbon monoxide and ethylene or terpolymers of carbon monoxide, ethylene and a second ethylenically unsaturated hydrocarbon of at least 3 carbon atoms, particularly an α-olefin having up to 10 carbon atoms, such as propylene.

When the preferred polyketone polymers are employed as the polymeric component of the composition of the invention, there will be within the terpolymer at least 2 units incorporating a moiety of ethylene for each unit incorporating a moiety of the second hydrocarbon. Preferably, there will be from 10 units to 100 units incorporating a moiety of ethylene for each unit incorporating a moiety of the second hydrocarbon. The polymer chain of the preferred polyketone polymers is therefore represented by the repeating formula 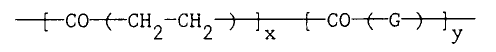
wherein G is the moiety of ethylenically unsaturated hydrocarbon of at least 3 carbon atoms polymerized through the ethylenic unsaturation and the ratio of y:x is less than 0.5. The 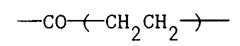
units and the 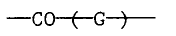
units are found randomly throughout the polymer chain, and preferred ratios of y:x are from 0.01 to 0.1. When copolymers of carbon monoxide and ethylene are employed in the blends of the invention, there will be no second hydrocarbon present and the copolymers are represented by the above formula wherein y is zero. The end groups or "caps" of the polymer chain may depend upon which materials were present during the production of the polymer. The precise nature of the end groups does not appear to influence the properties of the polymer to any considerable extent so that the polymers are fairly represented by the formula for the polymer chain as depicted above.

The physical properties of the polymer will depend in part upon the molecular weight, whether the polymer is a copolymer or a terpolymer and, in the case of terpolymers, the nature and the proportion of the second hydrocarbon present. Typical melting points for the polymers are from 175 °C to 300 °C, more typically from 210 °C to 270 °C. The molecular weight of the polymers can be rated using the limiting viscosity number (LVN), measured in m-cresol at 60 °C in a standard capillary viscosity measuring device. Preferably the LVN amounts to from 0.5 dl/g to 10 dl/g, more preferably from 0.8 dl/g to 4 dl/g.

A preferred method for the production of the polyketone polymers comprises contacting carbon monoxide and the ethylenically unsaturated compound(s) under polymerization conditions in the presence of a catalyst composition based upon a compound of palladium, the anion of a non-hydrohalogenic acid having a pKa (measured in water at 18 °C) of below about 6, preferably below 2, and a bidentate ligand of phosphorus. The scope of the polymerization is extensive but, without wishing to be limited, a preferred palladium compound is a palladium carboxylate, particularly palladium acetate, a preferred anion is the anion of trifluoroacetic acid or p-toluenesulfonic acid and a preferred bidentate ligand of phosphorus is 1,3-bis(diphenylphosphino)propane or 1,3-bis[bis(2-methoxyphenyl)phosphino]propane.

The polymerization to produce the polyketone polymer may be conducted in an inert reaction diluent, preferably an alkanolic diluent, in particular methanol. Typical polymerization conditions include a reaction temperature from 20 °C to 150 °C, preferably from 50 °C to 135 °C. The reaction pressure is suitably from 1 atmosphere to 200 atmospheres, pressures from 10 atmospheres to 100 atmospheres being preferred. The polyketone polymer may be recovered by conventional methods such as washing and filtration or decantation.

The method of producing the compositions of this invention is not critical so long as a relatively uniform distribution of the melt stabilizer throughout the polyketone is obtained. Conventional mixing devices and/or procedures known in the art are suitable for admixing the components of this invention.

The melt stabilized polymer composition of the invention may also include other additives such as antioxidants, dyes, fillers or reinforcing agents, fire resistant materials, mould release agents, colorants and other materials which improve the processability of the polymers or the properties of the resulting compound. Such additives are added prior to, together with, or subsequent to the blending of the polyketone and the melt stabilizing agent.

The compositions of the invention are excellently applicable in a variety of applications as engineering thermoplastics, in particular in the production of shaped articles which requires a number of melting/solidification cycles. Illustrative of such articles are containers for food and drink and parts and housings for automotive applications.

The invention is further illustrated by examples 1 and 2 following hereinafter.

### Experiment 1

### Preparation of polymer

A linear alternating terpolymer of carbon monoxide, ethylene, and propylene was produced in the presence of a catalyst composition formed from palladium acetate, trifluoroacetic acid and 1,3-bis[bis(2-methoxyphenyl)phosphino]propane. The polyketone polymer had a melting point of 223 °C and an LVN of 1.1 dl/g when measured in m-cresol at 60 °C.

### Experiment 2

### Preparation of magnesium hydroxide

A stirred solution of 100g magnesium chloride hexahydrate in 300 ml of deionized water was treated, dropwise, over a 15 minutes' period with 28% ammonium hydroxide to a final pH of 9.6. The resulting suspension was stirred for an additional 1.5 hours and then filtered to collect the precipitated solids.

The solids were washed with deionized water until no chloride was detected in the filtrates (by testing with silver nitrate solution) and then dried in the vacuum oven for 16 hours at 110 °C under a slow stream of nitrogen.

### Experiment 3

### Preparation of titanic acid

Ammonium hydroxide (28%) was added dropwise to a stirred suspension of 13.0 g of titanium nitrate (99.6%) in 300 ml of deionized water at room temperature to a final pH of 9.4. The reaction mixture was stirred for an additional 5 hours at room temperature and centrifuged to separate the solids from the supernatant. The solids were washed several times with fresh deionized water and then dried at 110 °C under a slow stream of nitrogen in the vacuum oven for 16 hours.

### Experiment 4

### Preparation of TiO₂ - MgO

A mixture of 0.75 g (6.6 mmole) of freshly prepared titanic acid, 2.25 g (38.6 mmole) of freshly prepared magnesium hydroxide and a few drops of deionized water were combined in a morter. The mixture was kneaded together over a 2 hours' period to make a thick paste and then dried in the vacuum oven at 110 °C under a slow stream of nitrogen for 16 hours.

The solids were calcined in the muffle furnace over 2 hours to 500 °C and ground to a fine powder. Analysis: Mg, 39.0 wt%; Ti, 18.0 wt%; Na, 45 ppm. The weight ratio of Ti/Mg was 1/2.17 and the weight ratio of TiO₂/MgO was 1/2.16.

By varying the ratio of titanic acid to magnesium hydroxide different compositions of TiO₂-MgO can be prepared.

### Experiment 5

### Preparation of alumina

To a 1 litre erlenmeyer flask was added 125g of aluminium nitrate nonanhydrate and 500 ml of deionized water. The mixture was stirred at room temperature to give a homogeneous solution.

In a separate 2 litre erlenmeyer flask was prepared a 1 molar solution of ammonium carbonate by dissolving 193g of ammonium carbonate in deionized water and diluting to a volume of 2 litres.

The nitrate solution and the ammonium carbonate solution were pumped, over a 20 minutes' period, simultaneously into a 6 litre stainless steel beaker containing 1.5 litre of deionized water which was stirred with a mechanical stirrer and heated at 50 °C. The reaction temperature was maintained at 50 °C and the pH at 7.5 by adjusting the flow rate of the ammonium carbonate solution during the addition and then the reaction mixture was stirred for an additional 2 hours at 50 °C, after all of the nitrate solution had been added.

The precipitated alumina was collected by vacuum filtration and washed by resuspending it in 1 litre of fresh deionized water and refiltering 20 times. The solids were then dried for 16 hours at 110 °C in the vacuum oven under a slow stream of nitrogen to give the freshly prepared alumina.

### Experiment 6

### Preparation of MgO-Al₂O₃

A mixture of 0.75g (12.9 mmole) of freshly prepared magnesium hydroxide, 2.25g (22 mmole) of freshly prepared alumina and a few drops of deionized water were combined in a morter. The mixture was kneaded together over a 2 hours' period to make a thick paste and then dried in the vacuum oven at 110 °C under a slow stream of nitrogen for 16 hours to yield 2.8g of dried solids.

The dried solids were calcined over a 5 hours period to 500 °C with 100 °C/hour increases in temperature to give 1.6g of product. Analysis: Al, 35.0 wt%; Mg, 18.0 wt%; Na, 290 ppm. The weight ratio of Mg/Al was 1/1.94 and the weight ratio of MgO/Al₂O₃ was 1/2.22.

By varying the ratio of alumina to magnesium hydroxide, different compositions of MgO-Al₂O₃ can be obtained.

### Example 1

### Preparation and testing of compositions containing magnesium oxidetitaniumoxide

A portion of the polymer of Experiment 1 was ground to 60 mesh, and then powder-mixed with magnesium oxide-titanium oxide compositions. Polymer samples containing magnesium oxide-titanium oxide in various ratios of the two components were prepared, as shown in Table I. The samples were compounded in a 19.05 mm (3/4 inch) single screw extruder, operating at 60 to 100 rpm with melt temperature between 230 and 250 °C. The viscosity of each sample was determined over time in the melt in a parallel plate rheometer operated at 275 °C. Table I lists the initial melt viscosity and the viscosity after 10 and 28 minutes.

**Table I**

| Composition (%w^{a)}) | | | Viscosity (Pa.s) after | | |
|---|---|---|---|---|---|
| MgO | TiO₂ | MgO/TiO₂ | 0 min. | 10 min. | 28 min. |
| 0 | 0 | 0 | 990 | 10,200 | 30,900 |
| .75 | .25 | 1 | 990 | 8,877 | 28,140 |
| .50 | .50 | 1 | 990 | 7,989 | 24,300 |
| .25 | .75 | 1 | 990 | 8,166 | 26,700 |

| | | | | | |
|---|---|---|---|---|---|
| ^{a)} relative to polymer | | | | | |

The results of Table I demonstrate that the magnesium oxidetitanium oxide compositions are effective agents for decreasing the viscosity increase of the polyketone polymer melt. With the magnesium oxide-titanium oxide stabilizers incorporated, the viscosity of the samples after 10 minutes and 28 minutes of heating is always less than that of samples without these stabilizers. Stabilizing agents containing about 50 %w magnesium oxide and about 50 %w titanium oxide have the best stabilizing properties.

### Example 2

### Preparation and testing of compositions containing magnesium oxide-alumina

The methods of Example 1 were substantially repeated using magnesium oxide-alumina compositions instead of magnesium oxidetitaniumoxide compositions. Table II lists the initial melt viscosity and the viscosity after 10 and 28 minutes.

**Table II**

| Composition (%w^{a)}) | | | Viscosity (Pa.s) after | | |
|---|---|---|---|---|---|
| MgO | Al₂O₃ | MgO/Al₂O₃ | 0 min. | 10 min. | 28 min. |
| 0 | 0 | 0 | 990 | 8,341 | 24,960 |
| .1 | .90 | 1 | 990 | 4,823 | 14,450 |
| .25 | .75 | 1 | 990 | 4,417 | 12,990 |
| .5 | .5 | 1 | 990 | 4,290 | 13,670 |

| | | | | | |
|---|---|---|---|---|---|
| ^{a)} relative to polymer | | | | | |

The results of Table II demonstrate that the magnesium oxide-alumina compositions are effective agents for decreasing the viscosity increase of the polyketone polymer melt. With the magnesium oxide-alumina stabilizers incorporated, the viscosity of the samples after 10 minutes and 28 minutes of heating is always less than that of samples without these stabilizers. Stabilizing agents containing about 25 %w magnesium oxide and about 75 %w alumina have the best stabilizing properties.

## Claims

1. Compositions comprising a linear alternating polymer of carbon monoxide with at least one ethylenically unsaturated compound and a melt stabilizing agent, wherein the melt stabilizing agent is a mixture of magnesium oxide and oxide(s) of titanium and/or aluminium and is present in an amount of from 0.1 %w to 10 %w, relative to the weight of the linear alternating polymer.

2. Compositions as claimed in claim 1, characterized in that the melt stabilizing agent is present in an amount of from 0.5 to 5 %w, relative to the amount of the linear alternating polymer.

3. Compositions as claimed in claim 2, characterized in that the melt stabilizing agent is present in an amount of from 0.7 to 2 %w, relative to the amount of the linear alternating polymer.

4. Compositions as claimed in any of claims 1 to 3, characterized in that the stabilizing agent comprises oxides of magnesium and titanium and in that the weight ratio of magnesium oxide to titanium oxide amounts to from 20:80 to 80:20.

5. Compositions as claimed in claims 4, characterized in that the weight ratio of magnesium oxide to titanium oxide amounts to from 40:60 to 60:40.

6. Compositions as claimed in any of claims 1 to 3, characterized in that the stabilising agent comprises oxides of magnesium and aluminium, and in that the weight ratio of magnesium oxide to aluminium oxide amounts to from 5:95 to 60:40.

7. Compositions as claimed in claims 6, characterized in that the weight ratio of magnesium oxide to aluminium oxide amounts to from 15:85 to 40:60.

8. Compositions as claimed in any of claims 1 to 7, characterized in that the linear alternating polymer is represented by the repeating formula 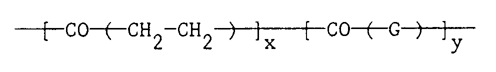 wherein y = 0 or the ratio of y:x is less than 0.5 and G represents the moiety of an ethylenically unsaturated hydrocarbon of at least 3 carbon atoms polymerized through the ethylenic unsaturation.

9. Compositions as claimed in claim 8, characterized in that the ratio of y:x is from 0.01 to 0.1.

10. Compositions as claimed in claim 8 or 9, characterized in that the ethylenically unsaturated hydrocarbon is an α-olefin having up to 10 carbon atoms.
